# EUROPEAN PATENT APPLICATION

(11) **EP 1 118 488 A1**
(43) Date of publication of application: **25.07.2001**
(21) Application number: 01200175.6
(22) Date of filing: 17.01.2001
(51) Int. Cl.: B60J 7/057

(54) **Open roof construction for a vehicle**

(30) Priority: 20.01.2000 NL 1014130
(71) Applicant: Inalfa Industries B.V., 5804 AB Venray (NL)
(72) Inventor: Nabuurs, Martinus Wilhelmus Maria, 5825 JT Overloon (NL)
(74) Representative: Voncken, Bartholomeus Maria Christiaan

(57) **Abstract**

In an open roof construction for a vehicle comprising a movable closure element for a roof opening, a drive unit for said closure element and a control unit for said drive unit, the control unit is designed as a modular unit. The control unit comprises at least one central module for providing the drive unit with basic functions. The central module includes connecting means for selectively connecting at least one auxiliary module to said central module, which auxiliary module functions to provide the drive unit with auxiliary functions.

## Description

The invention relates to an open roof construction for a vehicle, comprising a movable closure element for a roof opening, a drive unit for said closure element and a control unit for said drive unit.

Open roof constructions for vehicles exist in all kinds of embodiments thereof. A non-exhaustive list includes the following: open roof constructions wherein the closure element consists of a roof panel whose rear edge is capable of up-and-down movement, open roof constructions comprising a closure element in the form of a panel, which is capable of reciprocating sliding movement in the longitudinal direction of the vehicle, and open roof constructions wherein a closure element in the form of a panel is capable of combined sliding/tilting movement. Each open roof construction includes a control unit for effecting the aforesaid movement(s), which control unit is geared to the specific movement of the open roof construction in question. The control unit functions required for effecting said specific movement are called the basic functions.

One drawback of the prior art open roof constructions of the aforesaid type is that once the open roof construction is mounted in the vehicle, the operation of the open roof construction is completely determined (and limited) by said basic functions. This means that when the open roof is mounted in the vehicle it must be fully known already what functions the open roof construction is to perform. Subsequent adjustments or additions to these functions are not readily possible, generally the control unit needs to be exchanged for another control unit geared to the new functions.

Another drawback is that specific control units are required for each type of open roof construction that comprises advanced functions (that is, basic functions combined with additional functions), which specific control units have been designed entirely to accommodate said functions. This adds considerably to the cost of such control units, also in view of the fact that, due to the great diversity of control units, said control units can only be produced in small numbers, and that it will be necessary to keep a large number of different types of control units in stock.

The object of the invention is to provide an open roof construction of the present type wherein the aforesaid drawbacks are overcome in a simple yet efficient manner.

In order to accomplish that objective, the open roof construction of the aforesaid type is characterized in that the control unit is designed as a modular unit, comprising at least one central module for providing the drive unit with basic functions, which central module includes connecting means for selectively connecting at least one auxiliary module to said central module, which auxiliary module functions to provide the drive unit with auxiliary functions.

As standard, the open roof construction in question is fitted with the central unit when it is originally mounted in the vehicle, which central module is capable of carrying out the basic functions. When subsequently the need arises to supplement said basic functions with additional functions, an auxiliary module geared to the additional functions in question can be connected to said central module in a simple manner, so that the combination consisting of the central module and the auxiliary module will be capable of performing all the desired functions. It is also possible, of course, to connect more than one auxiliary module to the central module.

A suitable selection of the auxiliary module(s) to be added makes it possible to realise any desired combination of functions to be performed. This means that one and the same central module is suitable for a large number of different uses, which central module can thus be manufactured in larger numbers, and consequently at lower cost. During the manufacture of the open roof construction the final configuration of the control unit, geared to the specific embodiment of the open roof construction, can be realised at a later stage, which makes it possible to simplify the logistics of the production process. Furthermore it is possible for an end user to supplement the standard functions of the open roof construction with additional functions in a simple manner in accordance with his specific requirements. Think in this connection of functions such as moving the closure element to a comfort position (ventilating position, anti-oscillation position), an anti-jamming protection (preventing a part of the user's body getting jammed between the closure element and an edge of the roof opening), manipulation of the light transmission through the closure element (so that said closure element can also perform a sun screen function), etc. Adjustment of the functions of the open roof construction can also take place in response to changing market requirements or on the basis of subsequently (that is, after the original mounting) imposed safety regulations.

In a preferred embodiment of the open roof construction according to the invention the connecting means form a socket joint. In this manner the addition (and possible removal) of each auxiliary module can take place quickly and easily, without special tools being required.

Since the control unit can readily be adapted in the aforesaid manner, it is possible to design the control unit so that the central module thereof is suitably integrated into the open roof construction in advance already. Thus it will be possible to integrate the central module into the drive unit, for example an electric motor. In one embodiment of the open roof construction, wherein driving means, transmission means or the like transmitting the driving force are disposed between the drive unit and the closure element, this idea can be implemented in an advantageous manner by integrating the central module into the driving means, the transmission means or the like.

The invention is not restricted to the above-described embodiments, which can be varied in several ways without departing from the scope of the invention as defined in the claims.

## Claims

1. An open roof construction for a vehicle, comprising a movable closure element for a roof opening, a drive unit for said closure element and a control unit for said drive unit, **characterized in that** the control unit is designed as a modular unit, comprising at least one central module for providing the drive unit with basic functions, which central module includes connecting means for selectively connecting at least one auxiliary module to said central module, which auxiliary module functions to provide the drive unit with auxiliary functions.

2. An open roof construction according to claim 1, **characterized in that** said connecting means form a socket joint.

3. An open roof construction according to claim 1 or 2, **characterized in that** said central module is integrated into said drive unit.

4. An open roof construction according to claim 1 or 2, wherein driving means, transmission means or the like transmitting the driving force are disposed between the drive unit and the closure element, **characterized in that** the central module is integrated into said driving means, transmission means or the like.
